# NEW EUROPEAN PATENT SPECIFICATION

(11) **EP 3 222 019 B2**
(45) Date of publication and mention of the opposition decision: **03.04.2024**
(45) Mention of the grant of the patent: 15.07.2020
(21) Application number: 14811782.3
(22) Date of filing: 17.11.2014
(51) Int. Cl.: F04B 49/06, H04L 9/40, H04W 12/084, G06F 21/30, G06F 21/35, G06F 21/60, F04D 15/00

(54) **AUTHORISING A HANDHELD COMMUNICATION DEVICE ACCESS TO A PUMP UNIT**
AUTORISIERUNG DES ZUGRIFFS EINER TRAGBAREN KOMMUNIKATIONSVORRICHTUNG AUF EINE PUMPEINHEIT
AUTORISER UN DISPOSITIF DE COMMUNICATION PORTATIF À ACCÉDER À UNE UNITÉ DE POMPE

(43) Date of publication of application: 27.09.2017
(73) Proprietor: Grundfos Holding A/S, 8850 Bjerringbro (DK)
(72) Inventor: DAHLQVIST, Mathis, DK-7100 Vejle (DK)
(74) Representative: Rupp, Christian
(86) International application number: PCT/EP2014/074753
(87) International publication number: WO 2016/078686

(56) References cited:
- US-A1- 2006 095 772
- US-A1- 2013 243 614
- US-A1- 2014 007 211

## Description

### Field of the Invention

The present invention relates to a method for authorising a handheld communication device to interact with an installation control system and in particular a pump control system. The invention also relates to an installation control system comprising an installation and a handheld communication device.

### Background of the Invention

Many modern pump systems are provided with various types of controls in order to control pump units in specific ways. Circulation pumps are often intended to deliver a specific head and flow rate at given circumstances in order to meet particular requirements. To meet the different requirements, the pump units may be controlled according to different control patterns by changing one or more drive parameters. This may done by the user of the pump by use of input means provided at the pump itself, e.g. via an interface, such as a touch screen, at the pump unit. However, providing a pump unit with a display or a touch screen adds costs to the production price of the pump unit and thus also to the purchase price of the end consumer. Further, it entails a security risk, if everybody can gain access to the control system and to control the system to drive the pump unit at erroneous drive conditions.

EP 1 321 912 discloses a pump unit with a control or regulating device for controlling or regulating a drive of the pump, wherein the device has a light source for emitting light, which can be used for the transmission of data to a reader device.

WO 2013/041616 discloses a pump unit having an electrical drive motor and a control device for controlling the drive motor.

WO 2013/117401 discloses an electric motor, which is provided with a signal device for indicating at least two different operating states. For this purpose, the signal device has six light-emitting diodes, which are connected to flash mutually offset in time from one another, when the motor is running, so that they represent the rotary motion of the motor.

US 2013/243614 discloses controlling a pump using a smart phone application.

### Summary of the invention

It is an object of the invention to obtain a new method and system, which overcome or ameliorates at least one of the disadvantages of the prior art or which provide a useful alternative.

According to a first aspect, this is obtained by method according to claim 1 for wirelessly authorising a handheld communication device to interact with a pump control system.

Thereby, a user or service worker having a handheld communication device, such as a smart phone, may verify his or her physical presence in front of the installation and that the user or service worker is allowed to gain access to the device settings of the installation. Accordingly, the method and system provides a highly secure system, where only authorised users are allowed to control the installation.

By allowing a handheld communication device to access the software of the pump unit, the necessity of having an expensive user interface provided on the installation for controlling the pump unit is further eliminated.

The term "handheld communication device" may cover a number of portable devices of a limited size and may for instance be chosen from the group consisting of: a smart phone, a tablet, a PDA, and a wearable device, such as a smart watch.

The authorisation signal sequence may be a plurality of signals or only a single signal.

In a preferred embodiment, the installation control system is a pump control system comprising a pump unit. However, the installation control system could also be a water quality sensor control system comprising a water quality sensor.

In an advantageous embodiment, the authorisation signal sequence is generated by a random signal generator. Thereby, a random authorisation signal sequence may be generated, whereby the security of the system is increased even further.

In another advantageous embodiment, the signal generator comprises one or more light sources, such as diodes, and wherein the authorisation signal sequence is a light sequence. Correspondingly, the handheld communication device may comprise a photo detector, such as a CMOS array, and wherein the handheld communication device detects the authorisation signal sequence via the photo detector. Accordingly, the handheld communication device, such as a smart phone, may for instance measure the signal sequence via an internal camera. The authorisation signal sequence may be based on a temporal sequence, a spatial sequence (e.g. images), or a combination thereof. Some high end pump types have an LCD screen on the user interface, and the authorisation signal sequence can be generated by stationary or moving graphics or by displaying a code word. However, since a simplified pump unit (or installation) is often desired because of cost considerations, the pump unit is preferably only provided with a few diodes, in which case the authorisation signal sequence is preferably temporal based, e.g. based on Morse code. The authorisation signal sequence may additionally be based on varying the displayed colour from the diode(s), in which case the authorisation signal sequence may be made even more secure.

Thus, it is recognised that the installation or pump unit may utilise a design similar to those in WO 2013/117401 or EP 1 321 912, and that the light-emitting diodes may be brought to an operating state emitting the authorisation signal sequence. The optical generators or light diodes are preferably mounted on the electronic printed circuit board placed in the control box of the pump and situated within the confines of the user interface.

In principle, the pump unit may also be provided with a sound generator, such as a loud speaker, so that the authorisation signal sequence may be based on a sound or tone sequence, again e.g. Morse code. Accordingly, the handheld communication device may be provided with a sound detector, such as a microphone, so as to detect the authorisation signal sequence.

Step a) is initiated by the validation server sending a code to the installation in order for the installation to generate the authorisation signal sequence. In practice, the authorisation process is initiated from the handheld communication device. Thereby, the user may initiate the process from the handheld communication device in order to indicate his or her physical presence in front of the installation. The handheld communication device then transmits a signal to the validation server in order for it to initiate the authorisation process.

The validation server may also function as an interaction server in the installation control system. Accordingly, when the user has to interact with the installation, this may be carried out by sending instructions to the installation via the server, and the installation may provide feedback regarding the drive conditions of the installation via the server.

Accordingly, the validation server and interaction server may be a single server or cloud.

In another setup, the handheld communication device may interact with the installation directly, once the handheld communication device has been authorised to interact with the installation.

In one embodiment, the handheld communication device in step c) transmits the handshake signal to the server for verification. In another embodiment, the validation server carries out step d). Thereby, the server handles the authorisation process and upon receipt of a valid handshake signal, the server may instruct the installation to allow the handheld communication device to interact with the installation. This may for instance be carried out by the validation server after step d) transmitting an authorisation signal to the installation so as to authorise the handheld communication device to interact with the installation.

In one embodiment, the handheld communication device records a video sequence, and where an app in the handheld communication device extracts the authorisation signal sequence from the video sequence.

In another embodiment, after step d) only a part of a software and/or user interface is opened for access from the handheld communication device, for example access is allowed to monitoring status parameters, but access is denied to adjustment parameters, such as for example pump speed.

In a second aspect, the invention provides an pump control system according to claim 8.

Thereby, the invention provides an installation control system, where a user or service worker having a handheld communication device, such as a smart phone, may verify his or her physical presence in front of the installation and that the user or service worker is allowed to gain access to the device settings of the installation. Accordingly, the method and system provides a highly secure system, where only authorised users are allowed to control the installation.

By allowing a handheld communication device to access to the pump unit, the necessity of having an expensive user interface provided on the installation for controlling the pump unit is further eliminated.

The handheld communication device, such as a smart phone, may for instance be able to interact with the installation via a software application installed on the handheld communication device. The authorisation sequence may be initiated from a module of the software application.

In a preferred embodiment, the installation control system is a pump control system, and wherein the installation is a pump unit. The pump unit may have an electrical drive motor and a control module for controlling the drive motor. The control module may comprise at least one microprocessor and storage module, which is able to store at least one control program executable by the microprocessor.

In a preferred embodiment, the signal generator comprises one or more light sources, such as diodes, and wherein the authorisation signal sequence is a light sequence from the light sources. Correspondingly, the detector unit of the handheld communication device may comprise a photo detector, such as a CMOS array, and the handheld communication device detects the authorisation signal sequence via the photo detector.

In a preferred embodiment, the handheld communication device may cover a number of portable devices of a limited size and may for instance be chosen from the group consisting of: a smart phone, a tablet, a PDA, and a wearable device, such as a smart watch.

The installation control system further comprises a validation server. The validation server is preferably adapted to communicate with the handheld communication device and the installation. The validation server may facilitate the authorisation sequence and/or general communication between the handheld communication device and the installation.

In one embodiment, the authorisation unit is integrated in the validation server. In another embodiment, the authorisation unit is integrated in the installation.

In one embodiment, a user interface of the installation has means for initiating the authorisation signal sequence, e.g. a button on the user interface of the pump or an unlocked and accessible part of a graphical user menu in an LED display.

In another embodiment, the data communication between the handheld communication device and the validation server and between the validation server and the installation is based on bi-directional communication protocols, and the communication between the installation and the handheld communication device is based on a unidirectional communication protocol.

### Brief Description of the Figures

The invention is explained in detail below with reference to embodiments shown in the drawings, in which
Fig. 1 shows schematic views of a handheld communication device in form of a smart phone,
Fig. 2 shows a perspective view of an installation in form of a pump unit,
Fig. 3 shows a terminal box with a user interface of the pump unit,
Fig. 4 shows a schematic view of modules in the pump unit,
Figs. 5a-e show illustrate different steps in an authorisation sequence according to the invention, and
Fig. 6 shows a flow chart of the different steps in an authorisation sequence according to the invention.

### Detailed Description of the Invention

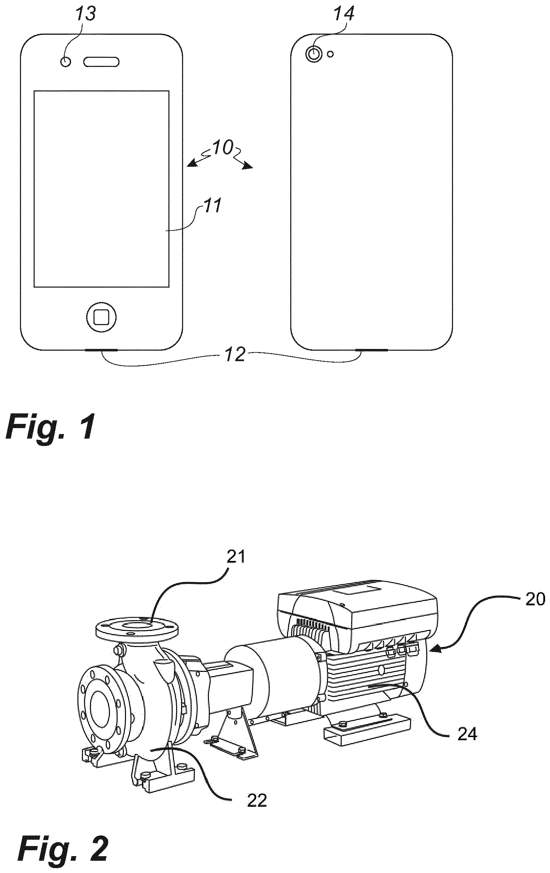

Fig. 1 shows a handheld communication device in form of a smart phone 10 illustrated in a front view and a rear view. The smart phone 10 comprises a display 11, and a microphone 12, a front camera 13 and a rear camera 14.

Fig. 2 shows a perspective view of a pump unit 20 or pump assembly, wherein the pump unit 20 is separated into a pump with a pump housing 22, which is connected to a pipe system 21 (pipes not shown), and an electrical motor in an electrical motor housing 24. The pump unit 20 is illustrated in an embodiment, where the pump and electrical motor are separated in separate housings. However, they may also be implemented in a common housing.

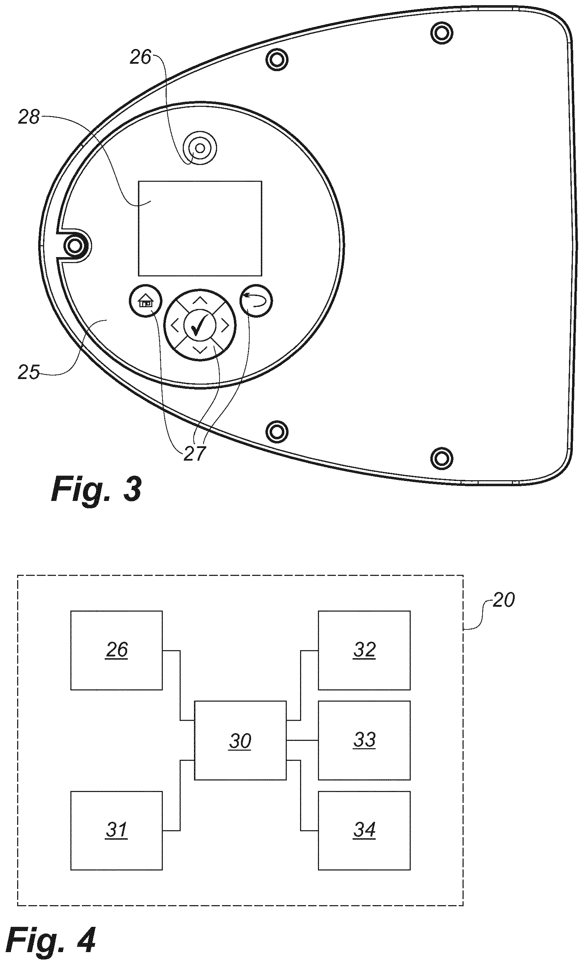

Fig. 3 illustrates a frontend of the pump unit 20, the terminal box comprising a control panel 25. The terminal box shown in Fig. 3 differs from the one shown in Fig. 2. The terminal box 29 comprises display diodes 26, which may for instance provide an indication of the operating state of the pump unit 20. In this sense, the display diodes 26 function as a signal generator by emitting light from the diodes to indicate the operating state. The control panel 25 further comprises an LED display 28 or touch screen and a number of control keys 27, which can be used to receive further information about the status and control settings of the pump unit. The control keys 27 may further be used for programming the control settings of the pump unit 20.

However, by allowing a handheld communication device to interact with the pump unit, the present invention alleviates the necessity of providing the terminal box with a display and control keys. In a preferred embodiment, this may be achieved by installing a software application, for example an app, on the handheld communication device, which is programmed to interact with the pump unit. Thereby, the production price and the purchase price for the end consumer may be lowered. Further, by removing the option to program the pump unit via a control panel, the security of the system is improved and ensures that the pump unit cannot be tampered with or reprogrammed without proper permission.

Fig. 4 shows a schematic view of modules in the pump unit 20. The pump unit 20 comprises a microprocessor 30, which controls the pump unit 20. The pump unit further comprises the signal generator 26, e.g. in form of the display diodes, a storage module 31, a control program 32, a transmitter 33, and a receiver 34.

The control program 32 allows a user to modify or generate a user application, which may control and modify at least one drive parameter of the pump unit 20, and the storage module 31 allows the user application to be stored in the pump unit 20. The transmitter 33 and receiver 34 allow the pump unit 20 to communicate with an external server or cloud and/or the handheld communication device. The communication may comprise a number of different communication types, such as but not limited to GSM, CDMA, 3G, 4G, infrared, and Bluetooth^{®}.

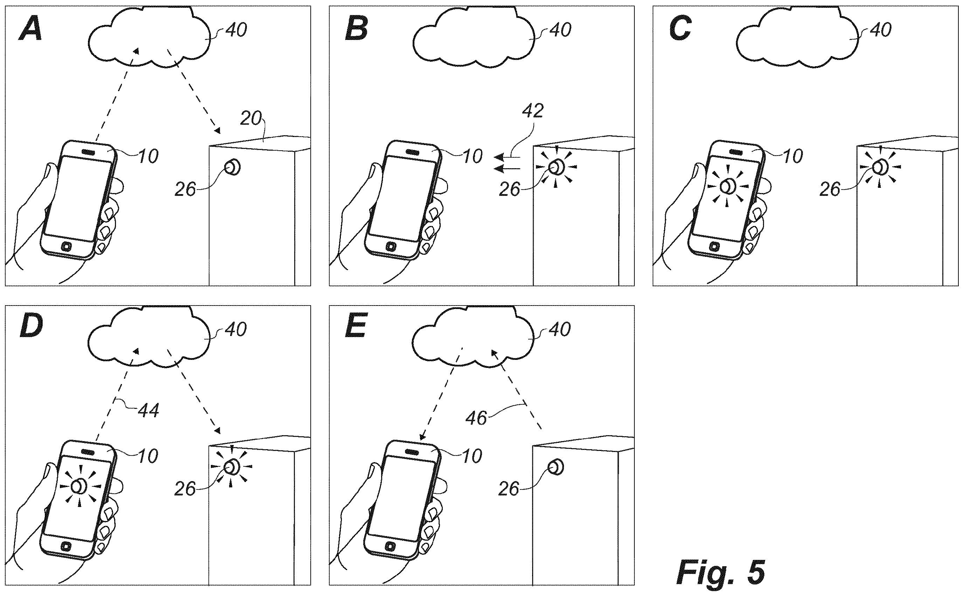

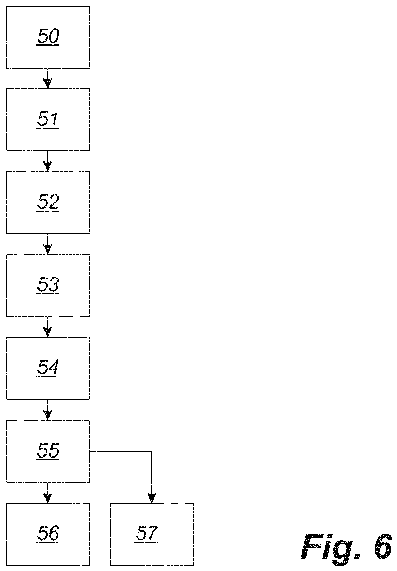

Figs. 5a-e show illustrate different steps in an authorisation process according to the invention, and Fig. 6 show a flow chart of the different steps in an authorisation sequence according to the invention. The authorisation sequence allows the handheld communication device 10 to interact with a pump control system, which comprises the pump unit 20 and an external server 40 or the internet cloud. The two figures illustrate a preferred embodiment for realising the authorisation sequence, which allows a user to interact and if need be change the settings of the pump unit 20.

In a first step 50, the user initialises an authorisation process. This may be achieved by the user initialising the authorisation process by choosing such an option via the software application installed on the handheld communication device 10. The handheld communication device 10 then as illustrated in Fig. 5a initialises the authorisation sequence by sending an initialisation signal to the server 40, which relays the initialisation signal to the pump unit 20.

Thus, the pump unit 20 is as illustrated in Fig. 5b instructed by the server 40 in a second step 51 to generate or retrieve from storage 31 and transmit an authorisation signal sequence 42, which is transmitted via the signal generator or display diodes 26, and which in a third step 52 is detected by the handheld communication device 10 as illustrated in Fig. 5c, e.g. via the rear camera 14. The authorisation signal sequence 42 may be based on both a temporal and a spatial sequence or pattern. Thus, if the display diodes for instance comprise a plurality of diodes, the authorisation signal sequence may be based on different combinations of light emitted from the diodes.

In one embodiment, the authorisation signal sequence 42 may be based on a random signal sequence generated by the server 40.

The detected signal is then in an optional fourth step 53 converted to another format. The different possible combinations for emitting light may for instance correspond to an ascii-code or Morse code or the like, whereby the detected signal may be converted to for instance a password. Then in a fifth step 54, the detected signal or converted signal is sent as a handshake signal 44 to the server 40 as illustrated in Fig. 5d. It is also possible that the handheld communication device via the built-in camera captures a video sequence of the authorisation signal sequence from the pump and sends the full video file to the validation server. The validation server then performs the image processing. Alternatively, an app in the handheld communication device performs an image processing of the video file and extracts the authorisation signal sequence from the video file and sends the authorisation signal sequence to the validation server.

The server 40 then in a sixth step 55 via an integrated authorisation unit compares the handshake signal 44 with a handshake pattern, which is associated with the authorisation signal sequence, e.g. a password associated with the authorisation signal sequence 42. If the handshake signal 44 matches the handshake pattern, the server 40 instructs the pump unit 20 to allow the handheld communication device 10 to interact with the pump unit, and the pump unit then in a seventh step 56 and as illustrated in Fig. 5e sends an authorisation to the handheld communication device 10, e.g. via the server 40, whereby communication is established between the handheld communication device 10 and the pump unit 20. Thereby the handheld communication device may interact with the pump unit so as to read out an operating state of the pump unit 20 and possibly alter the control settings of the pump unit 20. In principle step 56, which corresponds to Fig.5e, can be omitted because the pump 20 might be unlocked and opened for interaction with the handheld communication device already after step 55 when it received the ok signal from the validation server. The interaction may be facilitated via the server 40, or the interaction may be achieved by a direct communication between the handheld communication device 10 and the pump unit.

If the handshake signal 44 does not match the handshake pattern, the authorisation sequence is aborted in an eighth step 57. The user can after an unsuccessful attempt re-initiate the authorisation process. After a number of unsuccessful attempts, e.g. three attempts, the pump unit 20 may as a security measure disable the possibility of being authorised to interact with the control settings of the pump unit, e.g. by disabling the receiver 34, for a pre-determined time period. This provides an extra security measure, which ensures that the device settings may not be tampered with. The pump unit 20 may also send a warning signal to the server, whereby a provider may be informed of unauthorised attempts to gain access to the control settings of the pump unit 20.

The preferred embodiment utilises an external server 40 acting as a validation server and control/interaction server.

In the preferred embodiment, the signal generator of the pump unit comprises one or more light sources, and the detector unit is a camera. However, the authorisation process could also be based on other types of signals and detectors. The signal generator could for instance be a sound generator, such as a loudspeaker, and the detector of the handheld communication device be a microphone. In such a case, the signal generated could still be based on for instance Morse code, and the handheld communication device could convert the detected sound signals to a password for the handshake signal.

The preferred embodiment is illustrated for a pump unit and a pump control system. However, the authorisation sequence according to the invention could also be used for other installations, such as a water quality sensor, in an installation control system.

### Example A

The service technician is standing in front of the pump. The pump is by default locked to prevent software manipulation. It can be locked ab factory or by the last person installing the pump or making maintenance on it. Either the software of the pump is fully locked, or only a part of the software is open in order to initiate the authorization process by the service technician on the pump itself. In the following case the pump is fully locked. The service technician sends a signal to the validation server in the cloud using the handheld communication device using GSM protocol and/or Internet protocol. The validation server then sends a signal to the pump, asking it to generate an authorization signal sequence. The pump generates the sequence e.g. by table look-up in its memory. A corresponding table is placed in the validation server. The pump generates the sequence and sends it to the handheld device, either in a point-to-point communication mode, where the parties have a bi-directional communication using an agreed communication protocol (e.g. Bluetooth), or in a unidirectional communication mode (e.g. light emitting diodes), where the pump sends out the authorization signal sequence without receiving feedback from the handheld communication device. In case of optical signals from the pump, the handheld communication device records the signals with the camera inside the handheld device. The device can then, via an app, send the video footage directly to the validation server, or alternatively let the app decode the video footage by digital image processing techniques, and extract the authorization signal sequence. This sequence is then sent to the validation server. If the sequence matches the stored pattern or sequence in the validation server, then a signal is sent to the pump. The signal can instruct the pump to unlock (open up) its software and/or user interface fully, so that it can be set and adjusted by the service technician, or it can be instructed to only unlock a part of the software and/or user interface. For example the signal may only enable the user to stop or start the pump.

**Reference Numerals**

| | |
|---|---|
| 10 | Handheld communication device / smart phone |
| 11 | Display |
| 12 | Microphone |
| 13 | Camera |
| 14 | Camera |
| 20 | Pump unit |
| 21 | Pipes |
| 22 | Pump housing |
| 24 | Motor housing |
| 25 | Control panel |
| 26 | Signal generator / Display diodes |
| 27 | Control keys |
| 28 | Display |
| 30 | Microprocessor |
| 31 | Storage module |
| 32 | Control program |
| 33 | Transmitter |
| 34 | Receiver |
| 40 | Server / cloud |
| 42 | Authorisation signal sequence |
| 44 | Handshake signal |
| 46 | Authorisation |
| 50 | First step / User initialisation |
| 51 | Second step / Authorisation signal sequence |
| 52 | Third step / detecting |
| 53 | Fourth step / conversion |
| 54 | Fifth step / handshake |
| 55 | Sixth step / comparison |
| 56 | Authorisation |
| 57 | Abort |

## Claims

1. A method for wirelessly authorising a handheld communication device (10) to interact with a pump control system comprising a pump unit (20), said pump unit (20) comprising a signal generator (26), and a validation server (40), and wherein the handheld communication device (10) is provided with a detector unit (12, 13, 14) for detecting signals from the signal generator (26), wherein the method comprises the steps of:
a) the pump control system generating and sending an authorisation signal sequence (42),
b) the handheld communication device (10) detecting the authorisation signal sequence (42),
c) the handheld communication device (10) transmits a handshake signal (44) based on the detected authorisation signal sequence (42) to the validation server (40), which is in communicative contact with pump unit (20), and
d) the pump control system authorising the handheld communication device (10) to interact with the pump control system, if the handshake signal matches a handshake pattern associated with the authorisation signal sequence (42),
wherein step a) is initiated by the validation server (40) sending a code to the pump control system in order for the pump unit (20) to generate the authorisation signal sequence,
wherein the handheld communication device (10) is configured to transmit a signal to the validation server (40) in order for the validation server (40) to initiate step a).

2. A method according to claim 1, wherein the authorisation signal sequence is generated by a random signal generator.

3. A method according to any of claims 1-2, wherein the signal generator comprises one or more light sources, such as diodes or an LED display, and wherein the authorisation signal sequence is a light sequence, e.g.
wherein the handheld communication device comprises a photo detector, such as a CMOS array, and wherein the handheld communication device detects the authorisation signal sequence via the photo detector.

4. A method according to any of the preceding claims, wherein the handheld communication device in step c) transmits the handshake signal to the validation server for verification.

5. A method according to any of the preceding claims, wherein the validation server carries out step d), e.g. wherein the validation server after step d) transmits an authorisation signal to the pump unit so as to authorise the handheld communication device to interact with the installation.

6. A method according to any of the preceding claims, wherein the handheld communication device records a video sequence, and where an app in the handheld communication device extracts the authorisation signal sequence from the video sequence.

7. A method according to any of the preceding claims, wherein after step d) only a part of a software and/or user interface is opened for access from the handheld communication device, for example access is allowed to monitoring status parameters, but access is denied to adjustment parameters, such as for example pump speed.

8. A pump control system for wirelessly authorising a handheld communication device (10) to interact with a pump unit (20), wherein the pump control system comprises a validation server (40) and a pump unit (20), wherein
- the pump unit (20) comprises a signal generator (26) adapted to generate an authorization signal sequence (42), and
- the handheld communication device (10) is provided with a detector unit (12, 13, 14) for detecting signals from the signal generator (26), and which is adapted to generate and transmit a handshake signal (44) based on the authorisation signal sequence (42), and wherein the pump control system further comprises:
- an authorisation unit integrated in the validation server (40), which is adapted to compare the handshake signal (44) with a handshake pattern associated with the authorisation signal sequence (42), and is adapted to authorise the handheld communication device (10) to interact with settings of the pump unit (20), if the handshake signal (44) matches the handshake pattern
wherein the authorising of the handheld communication device (10) to interact with the pump unit (20) is initiated by the validation server (40) sending a code to the pump control system in order for the pump unit (20) to generate the authorisation signal sequence,
wherein the handheld communication device (10) is configured to transmit a signal to the validation server (40) in order for the validation server (40) to initiate said authorising.

9. A pump control system according to claim 8, wherein the pump unit (20) has an electrical drive motor and a control module for controlling the drive motor, e.g. wherein the control module comprises at least one microprocessor (30) and storage module (31), which is able to store at least one control program executable by the microprocessor (30), e.g.

10. A pump control system according to any of claims 8-9, wherein the signal generator (26) comprises one or more light sources, such as diodes, and wherein the authorisation signal sequence (42) is a light sequence from the light sources, e.g.
wherein the detector unit (13, 14) comprises a photo detector, such as a CMOS array, and wherein the handheld communication device (10) detects the authorisation signal sequence (42) via the photo detector (13, 14).

11. A pump control system according to any of claims 8-10, wherein the handheld communication device (10) is a portable device of a limited size and may for instance be chosen from the group consisting of: a smart phone, a tablet, a PDA, and a wearable device, such as a smart watch.

12. A pump control system according to any of claims 8-11, wherein the validation server (40) is adapted to communicate with the handheld communication device (10) and the installation (20), wherein the data communication between the handheld communication device (10) and the validation server (40) and between the validation server (40) and the installation (20), is based on bi-directional communication protocols, and the communication between the installation (20) and the handheld communication device (10) is based on a unidirectional communication protocol.

13. A pump control system according to any of claims 8-12, wherein a user interface of the installation (20) has means for initiating the authorisation signal sequence (42), e.g. a button on the user interface of the pump or an unlocked and accessible part of a graphical user menu in an LED display.

## Patentansprüche

1. Verfahren zum drahtlosen Autorisieren einer tragbaren Kommunikationsvorrichtung (10), um mit einem Pumpensteuerungssystem, das eine Pumpeneinheit (20) umfasst, zu interagieren, wobei die Pumpeneinheit (20) einen Signalgenerator (26) und einen Validierungsserver (40) umfasst und wobei die tragbare Kommunikationsvorrichtung (10) mit einer Erfassungseinheit (12, 13, 14) zum Erfassen von Signalen vom Signalgenerator (26) bereitgestellt ist, wobei das Verfahren die folgenden Schritte umfasst:
a) das Pumpensteuerungssystem erzeugt und sendet eine Autorisierungssignalsequenz (42),
b) die tragbare Kommunikationsvorrichtung (10) erfasst die Autorisierungssignalsequenz (42),
c) die tragbare Kommunikationsvorrichtung (10) überträgt ein Handshake-Signal (44) basierend auf der erfassten Autorisierungssignalsequenz (42) an den Validierungsserver (40), der in kommunikativem Kontakt mit der Pumpeneinheit (20) steht, und
d) das Pumpensteuerungssystem autorisiert die tragbare Kommunikationsvorrichtung (10), um mit dem Pumpensteuerungssystem zu interagieren, wenn das Handshake-Signal mit einem Handshake-Muster übereinstimmt, das der Autorisierungssignalsequenz (42) zugeordnet ist,
wobei Schritt a) durch den Validierungsserver (40) initiiert wird, der einen Code an das Pumpensteuerungssystem sendet, damit die Pumpeneinheit (20) die Authorisierungssignalsequenz erzeugt,
wobei die tragbare Kommunikationsvorrichtung (10) dazu konfiguriert ist, ein Signal an den Validierungsserver (40) zu senden, damit der Validierungsserver (40) Schritt a) einleitet.

2. Verfahren nach Anspruch 1, wobei die Autorisierungssignalsequenz durch einen Zufallssignalgenerator erzeugt wird.

3. Verfahren nach einem der Ansprüche 1-2, wobei der Signalgenerator eine oder mehrere Lichtquellen, wie Dioden oder eine LED-Anzeige, umfasst und wobei die Autorisierungssignalsequenz z. B. eine Lichtsequenz ist,
wobei die tragbare Kommunikationsvorrichtung einen Photodetektor, wie eine CMOS-Anordnung, umfasst und wobei die tragbare Kommunikationsvorrichtung die Autorisierungssignalsequenz über den Photodetektor erfasst.

4. Verfahren nach einem der vorstehenden Ansprüche, wobei die tragbare Kommunikationsvorrichtung in Schritt c) das Handshake-Signal an den Validierungsserver zur Verifizierung sendet.

5. Verfahren nach einem der vorstehenden Ansprüche, wobei der Validierungsserver Schritt d) ausführt, z.B. wobei der Validierungsserver nach Schritt d) ein Autorisierungssignal an die Pumpeneinheit überträgt, um die tragbare Kommunikationsvorrichtung zu autorisieren, um mit der Installation zu interagieren.

6. Verfahren nach einem der vorstehenden Ansprüche, wobei die tragbare Kommunikationsvorrichtung eine Videosequenz aufzeichnet und wobei eine Anwendung in der tragbaren Kommunikationsvorrichtung die Autorisierungssignalsequenz aus der Videosequenz extrahiert.

7. Verfahren nach einem der vorstehenden Ansprüche, wobei nach Schritt d) nur ein Teil einer Software und/oder Benutzerschnittstelle zum Zugriff von der tragbaren Kommunikationsvorrichtung geöffnet wird, zum Beispiel Zugriff auf Überwachungsstatusparameter erlaubt wird, aber Zugriff auf Anpassungsparameter, wie zum Beispiel Pumpendrehzahl, verweigert wird.

8. Pumpensteuerungssystem zum drahtlosen Autorisieren einer tragbaren Kommunikationsvorrichtung (10), um mit einer Pumpeneinheit (20) zu interagieren, wobei das Pumpensteuerungssystem einen Validierungsserver (40) und eine Pumpeneinheit (20) umfasst, wobei
- die Pumpeneinheit (20) einen Signalgenerator (26) umfasst, der dafür angepasst ist, eine Autorisierungssignalsequenz (42) zu erzeugen,
und
- die tragbare Kommunikationsvorrichtung (10) mit einer Erfassungseinheit (12, 13, 14) zum Erfassen von Signalen vom Signalgenerator (26) bereitgestellt ist und die dafür angepasst ist, ein Handshake-Signal (44) basierend auf der Autorisierungssignalsequenz (42) zu erzeugen und zu übertragen, und wobei das Pumpensteuerungssystem weiter umfasst:
- eine in den Validierungsserver (40) integrierte Autorisierungseinheit, die dafür angepasst ist, das Handshake-Signal (44) mit einem Handshake-Muster zu vergleichen, das der Autorisierungssignalsequenz (42) zugeordnet ist, und dafür angepasst ist, die tragbare Kommunikationsvorrichtung (10) zu autorisieren, um mit Einstellungen der Pumpeneinheit (20) zu interagieren, wenn das Handshake-Signal (44) mit dem Handshake-Muster übereinstimmt,
wobei die Autorisierung der tragbaren Kommunikationsvorrichtung (10), um mit der Pumpeneinheit (20) zu interagieren, durch den Validierungsserver (40) initiiert wird, der einen Code an das Pumpensteuerungssystem sendet, damit die Pumpeneinheit (20) die Autorisierungssignalsequenz erzeugt,
wobei die tragbare Kommunikationsvorrichtung (10) dazu konfiguriert ist, ein Signal an den Validierungsserver (40) zu senden, damit der Validierungsserver (40) die Autorisierung initiiert.

9. Pumpensteuerungssystem nach Anspruch 8, wobei die Pumpeneinheit (20) einen elektrischen Antriebsmotor und ein Steuerungsmodul zum Steuern des Antriebsmotors aufweist, z.B. wobei das Steuerungsmodul mindestens einen Mikroprozessor (30) und ein Speichermodul (31) umfasst, das in der Lage ist, z.B. mindestens ein durch den Mikroprozessor (30) ausführbares Steuerprogramm zu speichern.

10. Pumpensteuerungssystem nach einem der Ansprüche 8-9, wobei der Signalgenerator (26) eine oder mehrere Lichtquellen, wie Dioden, umfasst und wobei die Autorisierungssignalsequenz (42) z.B. eine Lichtsequenz von den Lichtquellen ist, wobei die Detektoreinheit (13, 14) einen Photodetektor, wie eine CMOS-Anordnung, umfasst und wobei die tragbare Kommunikationsvorrichtung (10) die Autorisierungssignalsequenz (42) über den Photodetektor (13, 14) erfasst.

11. Pumpensteuerungssystem nach einem der Ansprüche 8-10, wobei die tragbare Kommunikationsvorrichtung (10) eine portable Vorrichtung von einer begrenzten Größe ist und beispielsweise aus der Gruppe ausgewählt sein kann bestehend aus: einem Smartphone, einem Tablet, einem PDA und einer am Körper tragbaren Vorrichtung, wie einer Smartwatch.

12. Pumpensteuerungssystem nach einem der Ansprüche 8-11, wobei der Validierungsserver (40) dafür angepasst ist, um mit der tragbaren Kommunikationsvorrichtung (10) und der Installation (20) zu kommunizieren, wobei die Datenkommunikation zwischen der tragbaren Kommunikationsvorrichtung (10) und dem Validierungsserver (40) und zwischen dem Validierungsserver (40) und der Installation (20) auf bidirektionalen Kommunikationsprotokollen basiert und die Kommunikation zwischen der Installation (20) und der tragbaren Kommunikationsvorrichtung (10) auf einem unidirektionalen Kommunikationsprotokoll basiert.

13. Pumpensteuerungssystem nach einem der Ansprüche 8-12, wobei eine Benutzerschnittstelle der Installation (20) Mittel zum Initiieren der Autorisierungssignalsequenz (42) aufweist, z. B. eine Taste auf der Benutzerschnittstelle der Pumpe oder einen entsperrten und zugreifbaren Teil eines grafischen Benutzermenüs in einer LED-Anzeige.

## Revendications

1. Procédé pour autoriser en mode sans fil un dispositif de communication portatif (10) à interagir avec un système de commande de pompe comprenant une unité de pompe (20), ladite unité de pompe (20) comprenant un générateur de signaux (26), et un serveur de validation (40), et dans lequel le dispositif de communication portatif (10) est muni d'une unité détectrice (12, 13, 14) pour détecter des signaux provenant du générateur de signaux (26), el procédé comprenant les étapes suivantes :
a) le système de commande de pompe génère et envoie une séquence (42) de signaux d'autorisation,
b) le dispositif de communication portatif (10) détecte al séquence (42) de signaux d'autorisation,
c) sur la base de la séquence (42) de signaux d'autorisation détectée, le dispositif de communication portatif (10) transmet un signal de mise en liaison (44) au serveur de validation (40) qui est en contact communiquant avec l'unité de pompe (20), et
d) le système de commande de pompe autorise le dispositif de communication portatif (10) à interagir avec le système de commande de pompe si le signal de mise en liaison correspond à un motif de mise en liaison associé à la séquence (42) de signaux d'autorisation,
dans lequel l'étape a) est déclenchée par l'envoi par le serveur de validation (40) d'un code au système de commande de pompe pour que l'unité de pompe (20) engendre la séquence de signaux d'autorisation,
dans lequel le dispositif de communication portatif (10) est configuré pour transmettre un signal au serveur de validation (40) afin que le serveur de validation (40) déclenche l'étape a).

2. Procédé selon la revendication 1, dans lequel la séquence de signaux d'autorisation est engendrée par un générateur de signaux aléatoires.

3. Procédé selon l'une quelconque des revendications 1 et 2, dans lequel le générateur de signaux comprend une ou plusieurs sources de lumière, telles que des diodes ou un afficheur DEL, et dans lequel la séquence de signaux d'autorisation est une séquence de lumière ;par exemple
dans lequel el dispositif de communication portatif comprend un photodétecteur, tel qu'une matrice CMOS, et dans lequel le dispositif de communication portatif détecte la séquence de signaux d'autorisation via le photodétecteur.

4. Procédé selon l'une quelconque des revendications précédentes, dans lequel le dispositif de communication portatif dans l'étape c) transmet le signal de mise en liaison au serveur de validation pour vérification.

5. Procédé selon l'une quelconque des revendications précédentes, dans lequel le serveur de validation effectue l'étape d), par exemple dans lequel le serveur de validation après l'étape d) transmet un signal d'autorisation à l'unité de pompe de manière à autoriser le dispositif de communication portatif à interagir avec l'installation.

6. Procédé selon l'une quelconque des revendications précédentes, dans lequel le dispositif de communication portatif enregistre une séquence vidéo, et où une application dans le dispositif de communication portatif extrait de la séquence vidéo la séquence de signaux d'autorisation.

7. Procédé selon l'une quelconque des revendications précédentes, dans lequel après l'étape d) seule une partie d'un logiciel et/ou d'une interface utilisateur est ouverte à l'accès par le dispositif de communication portatif, par exemple l'accès est permis pour contrôler les paramètres d'état mais l'accès est refusé aux paramètres de réglage, comme la vitesse de la pompe par exemple.

8. Système de commande de pompe pour autoriser en mode sans fil un dispositif de communication portatif (10) à interagir avec une unité de pompe (20), dans lequel le système de commande de pompe comprend un serveur de validation (40) et une unité de pompe (20), dans lequel
- l'unité de pompe (20) comprend un générateur de signaux (26) adapté pour engendrer une séquence (42) de signaux d'autorisation, et
- le dispositif de communication portatif (10) est muni d'une unité détectrice (12, 13, 14) pour détecter des signaux provenant du générateur de signaux (26), et qui est adaptée pour engendrer et transmettre un signal de mise en liaison (44) basé sur la séquence (42) de signaux d'autorisation, et dans lequel le système de commande de pompe comprend en outre :
- une unité d'autorisation intégrée dans le serveur de validation (40), qui est adaptée pour comparer le signal de mise en liaison (44) à un motif de mise en liaison associé à la séquence (42) de signaux d'autorisation, et est adaptée pour autoriser le dispositif de communication portatif (10) à interagir avec les réglages de l'unité de pompe (20), si le signal de mise en liaison (44) correspond au motif de mise en liaison,
dans lequel l'autorisation donnée au dispositif de communication portatif (10) d'interagir avec l'unité de pompe (20) est déclenchée par l'envoi d'un code par le serveur de validation (40) au système de commande de pompe afin que l'unité de pompe (20) engendre la séquence de signaux d'autorisation,
dans lequel le dispositif de communication portatif (10) est configurée pour transmettre un signal au serveur de validation (40) afin que le serveur de validation (40) déclenche ladite autorisation.

9. Système de commande de pompe selon la revendication 8, dans lequel l'unité de pompe (20) comporte un moteur d'entraînement électrique et un module de commande pour commander le moteur d'entraînement, par exemple dans lequel le module de commande comprend au moins un microprocesseur (30) et un module de mémorisation (31) qui est capable de mémoriser au moins un programme de commande exécutable par le microprocesseur (30), par exemple.

10. Système de commande de pompe selon l'une quelconque des revendication 8 et 9, dans lequel le générateur de signaux (26) comprend une ou plusieurs sources de lumière, telles que des diodes, et dans lequel la séquence (42) de signaux d'autorisation est une séquence de lumière provenant des sources de lumière, par exemple:
dans lequel l'unité détectrice (13, 14) comprend un photodétecteur, tel qu'une matrice CMOS, et dans lequel le dispositif de communication portatif (10) détecte la séquence (42) de signaux d'autorisation via le photodétecteur (13, 14).

11. Système de commande de pompe selon l'une quelconque des revendications 8 à 10, dans lequel le dispositif de communication portatif (10) est un dispositif portable ayant une taille limitée et peut par exemple être choisi dans le groupe constitué par : un smartphone, une tablette, un assistant personnel numérique, et un dispositif portable sur soi, tel qu'une montre intelligente.

12. Système de commande de pompe selon l'une quelconque des revendication 8 à 11, dans lequel le serveur de validation (40) est adapté pour communiquer avec le dispositif de communication portatif (10) et l'installation (20), dans lequel la communication de données entre le dispositif de communication portatif (10) et le serveur de validation (40) et entre le serveur de validation (40) et l'installation (20) est basée sur des protocoles de communication bidirectionnels, et la communication entre l'installation (20) et le dispositif de communication portatif (10) est basée sur un protocole de communication unidirectionnel.

13. Système de commande de pompe selon l'une quelconque des revendication 8 à 12, dans lequel une interface utilisateur de l'installation (20) comporte un moyen pour initier la séquence (42) de signaux d'autorisation, par exemple un bouton sur l'interface utilisateur de la pompe ou une partie non verrouillée et accessible d'un menu d'utilisateur graphique dans un affichage DEL.
